**Europäisches Patentamt**

**European Patent Office**

**Office européen des brevets**

(11) Veröffentlichungsnummer: **0 159 580**
**A2**

## (12) EUROPÄISCHE PATENTANMELDUNG

(21) Anmeldenummer: **85103890.1**

(22) Anmeldetag: **01.04.85**

(51) Int. Cl.⁴: **F 16 N 25/02**

(30) Priorität: **21.04.84 DE 3415076**

(43) Veröffentlichungstag der Anmeldung: **30.10.85**
**Patentblatt 85/44**

(84) Benannte Vertragsstaaten: **AT BE CH DE FR GB IT LI NL SE**

(71) Anmelder: **Deutsche Tecalemit GmbH, Am Metallwerk 11, D-4800 Bielefeld 12 (DE)**

(72) Erfinder: **Middeke, Werner, Sennehof 54, D-4800 Bielefeld (DE)**

(74) Vertreter: **Thielking, Bodo, Dipl.-Ing. et al, Patentanwälte Dipl.-Ing. Bodo Thielking Dipl.-Ing. Otto Elbertzhagen Gadderbaumer Strasse 20, D-4800 Bielefeld 1 (DE)**

(54) **Zentralschmiereinrichtung.**

(57) Bei einer Zentralschmiereinrichtung ist eine zusätzliche Druckentlastungsvorrichtung (17) vorgesehen, die sicherstellt, daß zwischen den Druckimpulsen zur Betätigung der Zumeßventile (23) ein ausreichend schneller Druckabfall in der Druckleitung (6; 6a) auch dann erfolgt, wenn vergleichsweise lange Leitungssysteme und vergleichsweise hochviskose Öle und konsistente Fette verwendet werden. Das Vorsehen einer besonderen zusätzlichen Druckentlastungsvorrichtung (17), die neben derjenigen vorgesehen ist, die üblicherweise in die Zentralschmierpumpe (30) integriert ist, erlaubt einen besonders sicheren und schnellen Betrieb von Zentralschmiereinrichtungen.

0159580

## Zentralschmiereinrichtung

Die Erfindung betrifft eine Zentralschmiereinrichtung mit einem Schmierstoffvorratsbehälter, einer Zentralschmierpumpe, einer Zuleitung für Schmierstoff zu den Zumeßventilen (Hauptleitung) für die vorgesehenen Schmierstellen und einer im Bereich der Zentralschmierpumpe angeordneten Druckentlastungsvorrichtung.

Bei derartigen bekannten Zentralschmiereinrichtungen hat es sich bei deren Einsatz, insbesondere für Kraftfahrzeuge als nachteilig erwiesen, daß sie nur mit Fetten bestimmter Penetrationsbereiche, sogenannten Fließfetten, betrieben werden können. Solche Fließfette sind auch unter vergleichsweise niedrigen Außentemperaturen noch besser fließfähig als übliche Abschmierfette.

Bei solchen Zentralschmiereinrichtungen für Kraftfahrzeuge besteht die Forderung, daß die möglichen Leitungslängen, welche von der Volumenaufnahme der Leitungen, der Betriebstemperatur und der Eigenschaften der Schmierstoffe bestimmt sind, so kurz wie möglich gehalten werden.

Bei den bekannten Zentralschmiereinrichtungen ist es funktionsnotwendig, daß während des Schmierimpulses ein relativ hoher Betriebsdruck bis zu 100 bar erreicht werden kann. Danach muß der Druck in der sogenannten "Pausenzeit" unter einen bestimmten Umfülldruck der Zumeßventile, z.B. 4 bar, absinken.

Das Absinken unter den geforderten Umfülldruck kann bei Überschreiten bestimmter Leitungslängen und Verwendung von Leitungen mit einer relativ großen Volumenaufnahme sowie bei gleichzeitiger Verwendung von bestimmten Schmierstoffen bei extremen Betriebstemperaturen Schwierigkeiten bereiten. Wenn der erforderliche Druckabfall in der Pausenzeit nicht erreicht wird, weil der Druckabfall in der Schmierstoffleitung nicht ausreichend schnell erfolgt, hat dies die Folge, daß beim nächsten Schmierimpuls Schmierstoff durch die Zumeßventile nicht korrekt dosiert werden kann. Eine nicht ausreichend schnelle Entlastung in der Schmierstofförderleitung hat also bei ungünstigen Bedingungen die Folge, daß damit die Schmierstoffversorgung nicht mehr gewährleistet ist. Ebenso ist ein schneller Druckaufbau in der gesamten Druckleitung für die einwandfreie Funktion, insb. bei lang verzweigten Systemen und hochviskosen und konsistenten Schmierstoffen erforderlich.

Ausgehend von diesem Stand der Technik liegt der Erfindung die Aufgabe zugrunde, eine Zentralschmiereinrichtung so auszubilden, daß auch bei relativ großen Mengen in Leitungen mit großer Volumenaufnahme ein schneller Druckaufbau und Druckabfall im Schmierstoffsystem stets gewährleistet ist.

Die Lösung dieser Aufgabe erfolgt mit den Merkmalen des Kennzeichnungsteils von Anspruch 1.

Bei Bedarf können mehrere Druckentlastungsvorrichtungen an der Zuleitung vorgesehen sein. Das Vorsehen zusätzlicher Druckentlastungsvorrichtungen an der Zuleitung für Schmierstoff hat die Folge, daß die Druckentlastung nicht ausschließlich über die eine Druckentlastungsvorrichtung erfolgen muß, die üblicherweise in die Zentralschmierpumpe integriert ist. Es kann damit eine schnelle Druckentlastung herbeigeführt werden. Die Druckentlastung erfolgt in der Weise, daß beispielsweise eine mechanische oder pneumatische Rückholfeder den Kompressionskolben zurückdrückt mit der Folge, daß der mit der Schmierstoffzuleitung verbundene Druckraum vergrößert wird. Durch die Vergrößerung des Druckraums in der Druckentlastungsvorrichtung erfolgt ein sofortiger Druckabbau auf den gewünschten niedrigen Umfülldruck.

Nachstehend wird eine bevorzugte Ausführungsform der Erfindung anhand der Zeichnung im einzelnen beschrieben. Es zeigen beispielsweise:

Figur 1 - eine schematische Darstellung einer Zentralschmiereinrichtung mit zusätzlicher Durckentlastungsvorrichtung,

Figur 2 - eine schematische Darstellung der zusätzlichen Druckentlastungsvorrichtung,

Figur 3 - eine schematische Darstellung der Zentralschmierkolbenpumpe beim Saughub,

Figur 4 - die Zentralschmierkolbenpumpe gemäß Figur 3 beim Druckhub.

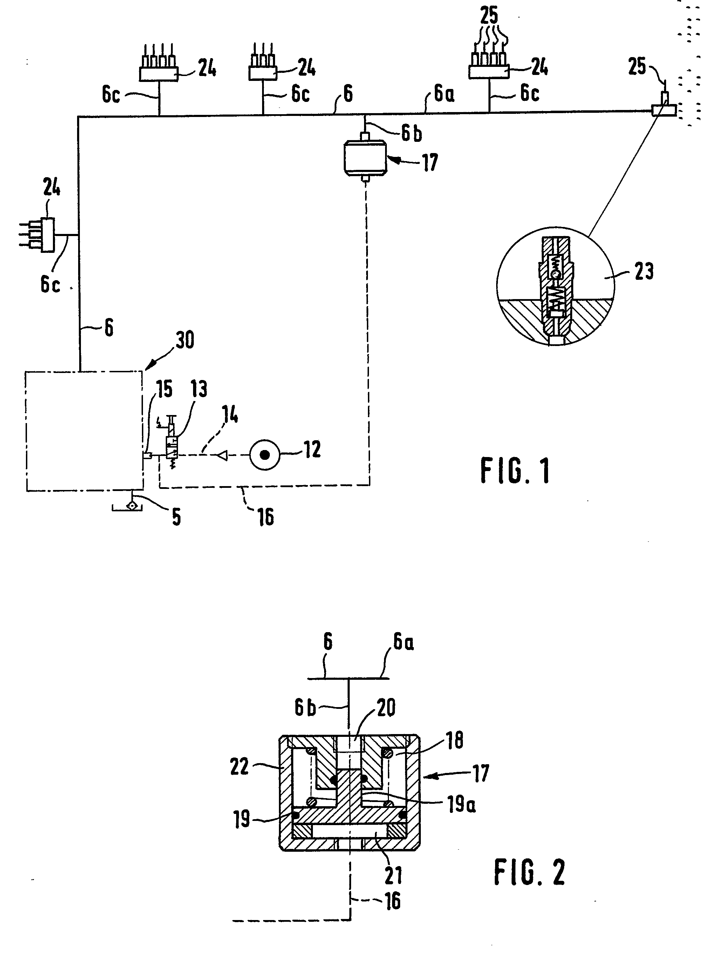

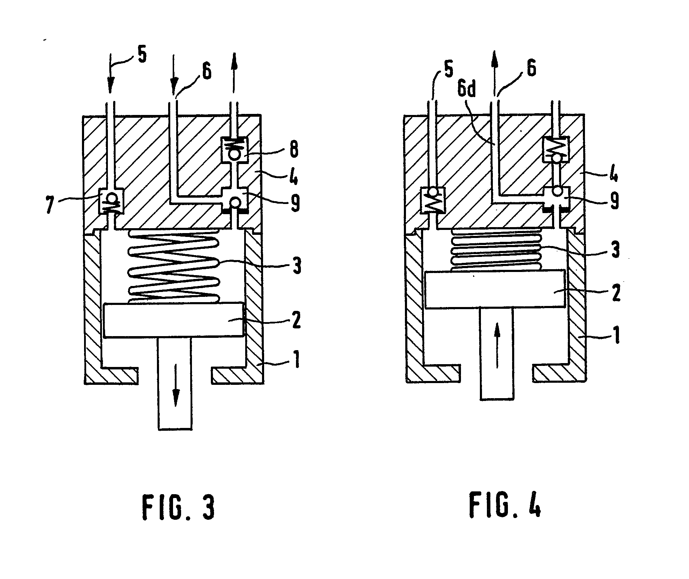

Die in . . Figuren 3 und 4 dargestellte Zentralschmierkolbenpumpe fördert bei jedem Hub die Schmierstoffmenge mit dem notwendigen Druck und soll nach einer Druckhaltezeit für die funktionswichtige Entlastung der Hauptleitung sorgen. Wenn die durch die Zentralschmierkolbenpumpe bewirkte Entlastung nicht ausreicht, ist das Vorsehen der zusätzlichen Druckentlastungsvorrichtung 17 erforderlich, die in Figuren 1 und 2 dargestellt ist.

Die Zentralschmierkolbenpumpe besteht aus einem Pumpenzylinder 1 mit Kolben 2 und Rückholfeder 3 sowie dem aufgeschraubten Ventilgehäuse 4, welches alle notwendigen Ventile und die Anschlüsse für Saugleitung 5 und Hauptleitung 6 enthält. Beim Saughub strömt der Schmierstoff über das Saugventil 7 in den Pumpenzylinder. Gleichzeitig ist die Hauptleitung 6 über das doppelt wirkende Kugelventil 9 bis auf den Umfülldruck des Rückschlagventils 8 entlastet. Beim Druckhub wird der Schmierstoff über das Kugelventil 9 in die Hauptleitung 6 gefördert.

Also kann der Druckimpuls in die Hauptleitung 6 frei zu den Zumeßventilen 23 gelangen und somit die festgelegte Dosierung bewirken. Nach einer bestimmten Druckhaltedauer wird die Hauptleitung 6 entlastet. Dadurch wird die Umfüllung der Zumeßventile 23 bewirkt.

Von der Hauptleitung 6 gehen Stichleitungen 6c zu den Verteilern 24 mit beliebig vielen Zumeßventilen 23, welche über Schmierstellenleitungen 25 den Schmierstoff zu den Schmierstellen fördern.

0159580

Die in Figur 1 insgesamt mit 30 bezeichnete
Zentralschmierkolbenpumpe, die in den
Figuren 3 und 4 genauer dargestellt ist, wird
über einen Druckluftkolben betätigt, der in den
Zeichnungen nicht dargestellt ist. Der Druckluftkolben erhält seine Druckluft von einer
Druckluftquelle 12 über eine Druckluftleitung 14
und ein zwischengeschaltetes elektrisch
betätigtes Magnetventil 13 durch eine Druckluftleitung 15. Von der Druckluftleitung 15 zweigt
eine Druckluftleitung 16 ab, die in den Druckzylinderraum 21 (vgl. Figur 2) der Druckentlastungsvorrichtung 17 führt. Im Druckzylinderraum 21 der Druckentlastungsvorrichtung 17
ist ein Kolben 19 gegen die Kraft einer
Rückholfeder 18 verschieblich. Der Kolben greift
mit einem Stempel 19a in einen Ausgleichsvolumenraum 20, der mit der Stichleitung 6b
zur Hauptleitung 6 bzw. 6a in Verbindung steht.

Die Druckentlastungsvorrichtung 17 besitzt ein
Gehäuse 22.

Beim Druckhub der Zentralschmierkolbenpumpe 30
(vgl. Figur 4) werden gleichzeitig die Druckluftleitung 15 und 16 beaufschlagt. Es wandert
deshalb der Kolben 19 mit dem Stempel 19a nach
oben. Der Ausgleichsvolumenraum 20 wird also
verkleinert. Der Ausgleichsvolumenraum 20 ist
so bemessen, daß er mindestens der Volumenvergrößerung des Leitungssystems und der
Kompression des Schmierstoffes beim Schmierimpuls, also der gesamten Volumenaufnahme
entspricht.

6:

Das Fördervolumen der Zentralschmierkolbenpumpe entspricht mindestens der Summe der Dosiervolumina der Zumeßventile und der anteiligen Volumenaufnahme der Hauptleitung und des Schmierstoffes unmittelbar an der Pumpe.

Statt der dargestellten und beschriebenen Druckentlastungsvorrichtung 17 ist der beschriebene Entlastungseffekt auch erzielbar durch Vorsehen einer zweiten Zentralschmierkolbenpumpe, die ebenfalls eine Entlastungsvorrichtung aufweist.

Einfacher ist es jedoch bei umfangreicheren Leitungssystemen zwei oder mehrere parallele oder hintereinander geschaltete Entlastungsvorrichtungen anzuordnen.

Patentansprüche

1. Zentralschmiereinrichtung mit einem Schmierstoffvorratsbehälter, einer Zentralschmierpumpe, einer oder mehrere Zuleitungen für Schmierstoff zu den Zumeßventilen für die vorgesehenen Schmierstellen und einer im Bereich der Zentralschmierpumpe angeordneten Druckentlastungsvorrichtung,
dadurch gekennzeichnet,
daß mindestens eine weitere Druckentlastungsvorrichtung (17) an der Druckleitung (6; 6b; 6a; 6d) vorgesehen ist, die einen beim Druckaufbau der Zentralschmierpumpe (30) kraftbetätigten Kompressionskolben (19; 19a) aufweist, der (19a) einen mit der Druckleitung (6b; 6; 6a; 6d) verbundenen Ausgleichsvolumenraum (20) beim Druckhub der Pumpe verkleinert und bei der Druckentlastung vergrößert.

2. Zentralschmiereinrichtung nach Anspruch 1,
dadurch gekennzeichnet,
daß die Druckentlastungsvorrichtung (17) eine mechanische oder pneumatische, den Kompressionskolben rückstellende Rückholfeder (18) aufweist.

3. Zentralschmiereinrichtung nach Anspruch 1 und/oder 2,
dadurch gekennzeichnet,
daß die Druckentlastungsvorrichtung (17) mit einer Druckluftleitung (16) verbunden ist, welche in einen Druckzylinderraum (21) mündet, der auf der Rückseite des Kompressionskolbens (19; 19a) angeordnet ist, welcher an seiner der Druckluftseite abgewandten Seite einen hydraulischen Druckstempel (19a) aufweist, der in den Ausgleichsvolumenraum (20) eintaucht.

0159580

FIG. 1

FIG. 2

FIG. 3          FIG. 4